**Europäisches Patentamt**

**European Patent Office**

**Office européen des brevets**

(19)

(11) Veröffentlichungsnummer : **0 399 022 B1**

(12) **EUROPÄISCHE PATENTSCHRIFT**

(45) Veröffentlichungstag der Patentschrift :
07.10.92 Patentblatt 92/41

(51) Int. Cl.⁵ : **B60Q 1/22,** B60Q 1/26

(21) Anmeldenummer : **90900128.1**

(22) Anmeldetag : **25.11.89**

(86) Internationale Anmeldenummer :
**PCT/EP89/01430**

(87) Internationale Veröffentlichungsnummer :
**WO 90/06246 14.06.90 Gazette 90/14**

(54) **FAHRZEUGLEUCHTE, INSBESONDERE NEBELSCHLUSS- ODER RÜCKFAHRLEUCHTE.**

(30) Priorität : **09.12.88 DE 3841501**

(43) Veröffentlichungstag der Anmeldung :
**28.11.90 Patentblatt 90/48**

(45) Bekanntmachung des Hinweises auf die
Patenterteilung :
**07.10.92 Patentblatt 92/41**

(84) Benannte Vertragsstaaten :
**ES FR GB IT**

(56) Entgegenhaltungen :
**DE-B- 1 021 255**

(56) Entgegenhaltungen :
**DE-B- 1 068 811**
**DE-C- 647 133**
**FR-A- 2 502 293**
**US-A- 1 883 466**
**US-A- 2 993 987**

(73) Patentinhaber : **SWF Auto-Electric GmbH**
**Stuttgarter Strasse 119 Postfach 1763**
**W-7120 Bietigheim-Bissingen (DE)**

(72) Erfinder : **PAULAT, Annerose**
**bei Ziegler, Eschenweg 4**
**W-7120 Bietigheim-Bissingen (DE)**
Erfinder : **WIRTH, Hans-Joachim**
**Am Schlossberg 47**
**W-7141 Oberstenfeld (DE)**

**Beschreibung**

Die Erfindung geht aus von einer Fahrzeugheckleuchte, insbesondere von einer Nebelschluß- oder Rückfahrleuchte, die die Merkmale aus dem Oberbegriff des Anspruchs 1 aufweist.

Bei Nebelschluß- und Rückfahrleuchten kommt es darauf an, daß zur Erzielung der notwendigen Lichtwerte das von einer in eine Kammer der Leuchte hineinragenden Glühlampe abgestrahlte Licht sehr gut ausgenutzt wird. Nebelschluß- und Rückfahrleuchten haben deshalb meist an der Rückseite der Leuchtenkammer einen Parabolreflektor, der auch das zur Seite und teilweise das nach rückwärts abgestrahlte Licht auf eine transparente Abdeckscheibe an der Vorderseite der Leuchtenkammer umlenkt. Durch die Abdeckscheibe treten dann nicht nur die direkt von der Glühlampe auf die Abdeckscheibe geworfenen Lichtstrahlen nach außen.

Nun kommt es manchmal vor, daß die Fläche, in der Licht aus der Leuchtenkammer nach außen tritt, relativ klein gehalten werden muß. Zum Beispiel kann der Kraftfahrzeughersteller dies aus Gründen des Designs wünschen. Bei sogenannten Mehrkammer-Fahrzeugheckleuchten, bei denen mehrere Funktionen wie z.B. Nebelschlußlicht, Rückfahrlicht, Fahrtrichtungsblinken und Schluß- und Bremslicht zusammengefaßt sind, soll außerdem die Lichtaustrittsfläche am Nebelschluß- oder Rückfahrlicht einen bestimmten Abstand zu den den anderen Funktionen zugeordneten Lichtaustrittsflächen besitzen, damit auch bei eingeschaltetem Nebelschluß- oder Rückfahrlicht eine Signalgabe durch eine benachbarte Lichtaustrittsfläche noch eindeutig erkannt werden kann. Somit ist einerseits eine nicht für den Lichtaustritt nutzbare Fläche an der Vorderseite der Fahrzeugheckleuchte vorhanden, andererseits soll die Fahrzeugheckleuchte eine bestimmte Größe nicht überschreiten. Auch dies kann eine kleine Lichtaustrittsfläche für eine bestimmte Signalfunktion nach sich ziehen.

Aus der US-A-2 993 987 ist ein nicht blendender Kraftfahrzeugscheinwerfer bekannt, dessen Lichtstrahlen nur vorwärts, d. h. parallel zur Fahrtrichtung, und auf die rechte Seite der Fahrbahn gerichtet sind. Dieser Scheinwerfer besitzt eine konkav nach vorn geöffnete Rückwand, durch welche eine Glühlampe in die Scheinwerferkammer hineinragt. Zwischen der Rückwand und einer frontseitigen Abdeckscheibe befindet sich eine konkav nach hinten geöffnete Vorderwand, die nur einen Teil der Rückwand abdeckt, also eine Öffnung für den Lichtdurchtritt offen läßt. In dem Bereich zwischen Rückwand und Vorderwand befindet sich die Glühlampe, die in Richtung der frontseitigen Abdeckscheibe vollständig abgeschirmt ist, so daß kein Lichtstrahl direkt von der Glühlampe auf die Abdeckscheibe gelangen kann. Die Rückwand und die Vorderwand besitzen Bereiche, die lichtabsorbierend beschichtet sind und jeweils einen Bereich, der hochreflektierend beschichtet ist. Diese Bereiche sind so zueinander ausgerichtet, daß Anteile des von der Glühlampe abgestrahlten Lichtes nach entsprechender Umlenkung an den hochreflektierenden Bereichen durch die zwischen Vorderwand und Rückwand verbliebene Öffnung durch die Abdeckscheibe nach außen gelangen. Dabei erstreckt sich der Lichtkegel von parallel zur Fahrtrichtung bis zur rechten Seite bezogen auf die Fahrtrichtung.

Nachteilig an diesem Scheinwerfer in bezug auf das für die Fahrzeugheckleuchte zu lösende Problem ist, daß durch die Größe, die Lage und die relativ großflächige lichtabsorbierende Beschichtung der Vorder- und der Rückwand ein sehr großer Teil des von der Glühlampe erzeugten Lichtes nicht nutzbar ist. Außerdem ist auf der Abdeckscheibe eine deutliche Abgrenzung einer gegenüber dem Querschnitt der Scheinwerferkammer kleineren Lichtaustrittsfläche nicht möglich, da Streulicht nahezu die gesamte Abdeckscheibe erreichen kann.

Aufgabe der Erfindung ist es, eine Fahrzeugheckleuchte mit den Merkmalen aus dem Oberbegriff des Anspruchs 1 so weiterzuentwickeln, daß auch bei kleiner Lichtaustrittsfläche die notwendigen Lichtwerte erreicht werden können.

Diese Aufgabe wird erfindungsgemäß durch eine Fahrzeugheckleuchte gelöst, die mit den Merkmalen aus dem Oberbegriff des Anspruchs 1 ausgestattet ist und bei der zusätzlich die Leuchtenkammer im Querschnitt größer als die Lichtaustrittsfläche an ihrer Vorderseite ist und die Glühlampe teilweise von einem Kugelreflektor umgeben ist, dessen Zentrum wenigstens annähernd mit der Glühwendel der Glühlampe zusammenfällt und der von der Glühlampe abgestrahltes Licht auf den Parabolreflektor wirft und die Vorderseite der Leuchtenkammer teilweise durch eine zusätzlich zum Kugelreflektor vorhandene Blende abgedeckt ist.

Bei einer erfindungsgemäßen Fahrzeugheckleuchte wird also auch ein außerhalb der Lichtaustrittsfläche an der Vorderseite liegender Teil der Leuchtenkammer lichttechnisch ausgenutzt. Ein dort vorhandener Kugelreflektor wirft Licht, das ansonsten von einer Seitenwand der Leuchtenkammer geschluckt oder reflektiert würde, ohne daß es nutzbar gemacht werden könnte, in sich selbst zurück, so daß es auf den Parabolreflektor fällt, als ob es von der Glühwendel käme. Durch das Ausnutzen dieses Lichtanteils können auch bei einer kleinen Lichtaustrittsfläche die erforderlichen, insbesondere beim Nebelschlußlicht sehr hohen Lichtwerte erreicht werden.

Durch die Blende wird sichergestellt, daß direkt von der Glühlampe kommendes und vom Kugelreflektor nicht ausgeblendetes Licht die Vorderseite der Leuchtenkammer nicht in dem Bereich ausleuchtet, der nicht als Lichtaustrittsfläche vorgesehen ist. Selbst wenn jedoch der Kugelreflektor die Strahlen der Glühlampe, die

2

direkt auf diesen Bereich der Vorderseite der Leuchtenkammer fallen würden, ausblendet, ist eine zusätzliche Blende von Vorteil, da sie verhindert, daß Streulicht, das wegen der Nähe des Kugelreflektors zur Glühlampe auf den dunklen Bereich an der Vorderseite der Leuchtenkammer fällt, diesen Bereich nicht ausleuchtet. Die transparente Abdeckscheibe erstreckt sich vorteilhafterweise auch über die Blende.

Vorteilhafte Ausgestaltungen einer erfindungsgemäßen Fahrzeugheckleuchte kann man den Unteransprüchen entnehmen.

So befindet sich gemäß Anspruch 2 der Parabolreflektor im wesentlichen nur auf einer Seite einer durch die Achse der Glühlampe gehenden Ebene.

Bevorzugt wird eine Ausführung, bei der der Kugelreflektor größer als ein Bereich ist, von dem aus von der Glühlampe abgestrahltes Licht auf den Parabolreflektor geworfen wird. Dies erleichtert unter Umständen die Herstellung des Kugelreflektors. Außerdem kann der Reflektor zugleich als Blende für den Bereich an der Vorderseite der Leuchtenkammer benutzt werden, der nicht ausgeleuchtet werden soll. Der Kugelreflektor erstreckt sich dann im Raum zwischen der Glühlampe und der Vorderseite der Leuchtenkammer über einen Bereich hinaus, von dem aus Licht auf den Parabolreflektor geworfen wird. Insbesondere kann sich der Kugelreflektor im Raum zwischen der Glühlampe und der Vorderseite der Leuchtenkammer wenigstens annähernd bis zu einer durch die Achse der Glühlampe gehenden Ebene erstrecken.

Als Heckleuchten von Kraftfahrzeugen werden heute fast nur noch sogenannte Mehrkammerleuchten verwendet, bei denen eine Kammer einer oder mehreren Signalfunktionen zugeordnet ist. Bei einer solchen Mehrkammerleuchte mit zwei benachbarten Leuchtenkammern kann sich der durch den Kugelreflektor und die zusätzliche Blende gegen von der Glühlampe abgestrahltes Licht abgeschirmte Bereich der Vorderseite der einen Leuchtenkammer an die Vorderseite der anderen Leuchtenkammer anschließen. Man erhält dadurch eine deutlich sichtbare Trennung zwischen den Lichtaustrittsflächen zweier Leuchtenkammern, so daß Signale auch dann noch erkennbar sind, wenn sie gleichzeitig abgegeben werden. Insbesondere weist die dem Nebelschlußlicht zugeordnete Leuchtenkammer den abgeschirmten Bereich in ihrer Vorderseite auf.

Besonders bevorzugt wird auch eine Ausführung nach Anspruch 9. Danach ist die Leuchtenkammer im Querschnitt größer als die Lichtaustrittsfläche an ihrer Vorderseite. Die Glühlampe befindet sich mit ihrem Glaskolben zumindest teilweise in dem außerhalb der Lichtaustrittsfläche liegenden Bereich der Leuchtenkammer, und die Rückseite der Leuchtenkammer wird in dem hinter der Lichtaustrittsfläche liegenden Bereich durch einen Parabolreflektor gebildet. Durch die genannte Lage der Glühlampe kann der Parabolreflektor sehr groß ausgebildet werden und einen sehr großen Teil des von einer Glühlampe abgestrahlten Lichts auf die Lichtaustrittsfläche lenken. Es wird dabei auch schon ohne Kugelreflektor eine hohe Lichtausbeute erzielt, so daß eine Fahrzeugheckleuchte mit den Merkmalen aus dem Anspruch 9 auch ohne Kugelreflektor schon mit Vorteil eingesetzt werden kann.

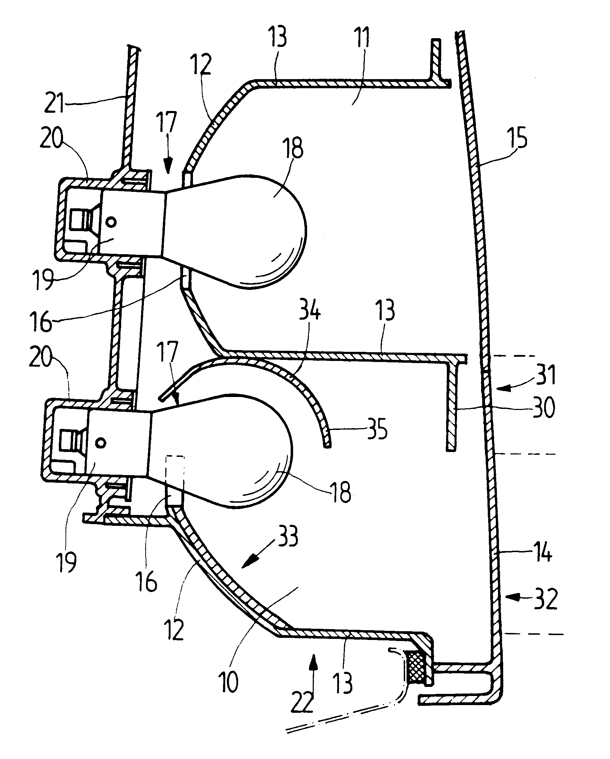

Ein Ausführungsbeispiel einer erfindungsgemäßen Fahrzeugheckleuchte, das zwei benachbarte Leuchtenkammern aufweist, ist in der Zeichnung in einem durch beide Leuchtenkammern gehenden Schnitt dargestellt. Anhand dieser Zeichnung wird die Erfindung nun näher erläutert.

Die gezeigte Mehrkammerleuchte weist u. a. eine Kammer 10, die dem Nebelschlußlicht zugeordnet ist, und eine Kammer 11 auf, die dem Blinklicht für die Fahrtrichtungsanzeige und das Warnen zugeordnet ist. Die Leuchtenkammern 10 und 11 besitzen eine Rückseite 12 und Seitenwände 13, von denen eine den beiden Kammern gemeinsam ist. An der Vorderseite ist die Leuchtenkammer 10 durch eine rote transparente Abdeckscheibe 14 und die Leuchtenkammer 11 durch eine gelbe transparente Abdeckscheibe 15 verschlossen. Durch Öffnungen 16 an den Rückseiten 12 ragt in jede Kammer eine Glühlampe 17 mit einem Glaskolben 18 hinein. Mit ihrem Sockel 19 sitzen die Glühlampen 17 in Fassungen 20 eines Lampenträgers 21, der hinter den Rückseiten 12 lösbar an dem die Leuchtenkammern bildenden Leuchtengehäuse 22 befestigt ist.

Die Abdeckscheibe 14 der Leuchtenkammer 10 ist von der den beiden Leuchtenkammern 10 und 11 gemeinsamen Seitenwand 13 her durch eine lichtundurchlässige Blende 30 hinterlegt, die sich von dieser gemeinsamen Seitenwand aus etwa über ein Drittel des Abstandes bis zur gegenüberliegenden Seitenwand 13 erstreckt. An der Vorderseite der Leuchtenkammer 10 wird also ein bestimmter Bereich 31, der sich an die Leuchtenkammer 11 anschließt, nicht ausgeleuchtet. Deshalb kann ein Blinklicht auch dann noch gut erkannt werden, wenn das Nebelschlußlicht brennt.

Die Leuchtenkammer 10 ist nach dem Vorbeschriebenen im Querschnitt größer als die Lichtaustrittsfläche 32 an ihrer Vorderseite. Die Glühlampe 17 ist nicht zentral in der Leuchtenkammer 10 angeordnet, sondern zur Leuchtenkammer 11 hin so weit verschoben, daß ihre Glühwendel etwa auf Höhe der freien Stirnseite der Blende 30 liegt. Dadurch wurde auf der einen Seite der Glühlampe 17 und hinter der Lichtaustrittsfläche 32 Platz für einen Parabolreflektor 33 geschaffen, der von der Rückwand 12 und einer darauf aufgebrachten reflektierenden Schicht gebildet wird. In seinen hinter der Blende 30 befindlichen Teilen ist der Glaskolben 18 der Glühlampe 17 von einem Kugelreflektor 34 umgeben, der außerhalb der Lichtaustrittsfläche 32 liegt, dessen Zentrum wenigstens annähernd mit der Glühwendel der Glühlampe 17 zusammenfällt und der von der Glühlampe 17 abgestrahltes Licht auf den Parabolreflektor 33 wirft. Dieses Licht trifft auf den Parabolreflektor 33 wenigstens annähernd so, als ob es von der Glühwendel der Glühlampe 17 käme und wird deshalb vom Reflektor 33 zur Lichtaustrittsfläche 32 abgelenkt. Auf diese Weise wird zur Ausleuchtung der Lichtaustrittsfläche 32 auch Licht ausgenutzt, das von der Glühlampe 17 in den Bereich hinter der Blende 30 abgestrahlt wird. Die für das Nebelschlußlicht erforderlichen Lichtwerte können dadurch erreicht werden.

Der Kugelreflektor 34 ist so groß, daß nicht das ganze von der Glühlampe 17 auf ihn abgestrahlte und von ihm zurückgeworfene Licht zum Parabolreflektor 33 gelangt. Insbesondere erstreckt sich der Kugelreflektor 34 in den Raum zwischen der Glühlampe 17 und der Vorderseite der Leuchtenkammer 10 etwa bis zu der durch die Stirnseite der Blende 30 und die punktförmig gedachte Glühwendel der Glühlampe 17 definierten Ebene, auch wenn von dort Licht durch die Öffnung 16 in der Rückwand 12 geworfen wird. Der Kugelreflektor 34 wirkt jedoch in diesem Abschnitt, der in der Zeichnung mit der Bezugszahl 35 versehen ist, als zusätzliche Blende, die kein von der Glühlampe 17 abgestrahltes Licht direkt zur Blende 30 gelangen läßt. Diese muß deshalb hinsichtlich des Materials und der Stärke nur so ausgelegt sein, daß sie auf sie auftreffendes Streulicht schlucken kann.

Falls bei einer anderen Ausführung einer erfindungsgemäßen Fahrzeugheckleuchte die Kammer 10 dem Rückfahrlicht zugeordnet ist, wird anstelle der roten eine farblose Abdeckscheibe 14 verwendet. Ansonsten kann eine solche Leuchte wie die in der Zeichnung dargestellte Leuchte aufgebaut sein.

**Patentansprüche**

1. Fahrzeugheckleuchte, insbesondere Nebelschluß- oder Rückfahrleuchte, mit einer Leuchtenkammer (10), die zur Vorderseite hin durch eine transparente Abdeckscheibe (14) abgeschlossen ist, mit einer von der Rückseite (12) in die Leuchtenkammer (10) hineinragenden Glühlampe (17) und mit einem Parabolreflektor (33), der von der Glühlampe (17) abgestrahltes Licht auf die Abdeckscheibe (14) umlenkt, dadurch gekennzeichnet, daß die Leuchtenkammer (10) im Querschnitt größer als die Lichtaustrittsfläche (32) an ihrer Vorderseite ist und daß die Glühlampe (17) teilweise von einem Kugelreflektor (34) umgeben ist, der außerhalb der Lichtaustrittsfläche (32) liegt, dessen Zentrum wenigstens annähernd mit der Glühwendel der Glühlampe (17) zusammenfällt und der von der Glühlampe (17) abgestrahltes Licht auf den Parabolreflektor (33) wirft, und daß die Vorderseite der Leuchtenkammer (10) teilweise durch eine zusätzlich zum Kugelreflektor (34) vorhandene Blende (30) abgedeckt ist.

2. Fahrzeugheckleuchte nach Anspruch 1, dadurch gekennzeichnet, daß sich der Parabolreflektor (33) im wesentlichen nur auf einer Seite einer durch die Achse der Glühlampe (17) gehenden Ebene befindet.

3. Fahrzeugheckleuchte nach Anspruch 1 oder 2, dadurch gekennzeichnet, daß der Kugelreflektor (34) größer als ein Abschnitt von ihm ist, von dem aus von der Glühlampe (17) abgestrahltes Licht auf den Parabolreflektor (33) geworfen wird.

4. Fahrzeugheckleuchte nach Anspruch 3, dadurch gekennzeichnet, daß sich der Kugelreflektor (34) im Raum zwischen der Glühlampe (17) und der Vorderseite der Leuchtenkammer (10) über einen Abschnitt, von dem aus Licht auf den Parabolreflektor (33) geworfen wird, hinaus erstreckt.

5. Fahrzeugheckleuchte nach Anspruch 4, dadurch gekennzeichnet, daß sich der Kugelreflektor (34) im Raum zwischen der Glühlampe (17) und der Vorderseite der Leuchtenkammer (10) wenigstens annähernd bis zu einer durch die Achse der Glühlampe (17) gehenden Ebene erstreckt.

6. Fahrzeugheckleuchte nach Anspruch 5, dadurch gekennzeichnet, daß sich die transparente Abdeckscheibe (14) auch über die Blende (30) erstreckt.

7. Fahrzeugheckleuchte nach einem der vorhergehenden Ansprüche, dadurch gekennzeichnet, daß sie zwei benachbarte Leuchtenkammern (10, 11) aufweist und daß sich der durch den Kugelreflektor 34 und-/oder die zusätzliche Blende (30) gegen von der Glühlampe (17) abgestrahltes Licht abgeschirmte Bereich (31) der Vorderseite der einen Leuchtenkammer (10) an die Vorderseite der anderen Leuchtenkammer (11) anschließt.

8. Fahrzeugheckleuchte nach Anspruch 7, dadurch gekennzeichnet, daß die dem Nebelschluß- oder Rückfahrlicht zugeordnete Leuchtenkammer (10) den abgeschirmten Bereich (31) an ihrer Vorderseite aufweist.

4

9. Fahrzeugheckleuchte, insbesondere nach einem der vorhergehenden Ansprüche, dadurch gekennzeichnet, daß die Leuchtenkammer (10) im Querschnitt größer als die Lichtaustrittsfläche (32) an ihrer Vorderseite ist, daß sich die Glühlampe (17) mit ihrem Glaskolben (18) zumindest teilweise in dem außerhalb der Lichtaustrittsfläche (32) liegenden Bereich der Leuchtenkammer (10) befindet und daß die Rückseite (12) der Leuchtenkammer (10) in dem hinter der Lichtaustrittsfläche (32) liegenden Bereich durch einen Parabolreflektor (33) gebildet wird.

## Claims

1. A rear lamp for motor vehicles, especially a fog warning or backup lamp, with a lamp compartment (10) which is covered by a transparent cover glass (14) towards the front, with a bulb (17) projecting into the lamp compartment (10) from the back (12) and with a parabolic reflector (33) diverting light from the bulb (17) to the cover glass (14), wherein the cross-section of the lamp compartment is bigger than the light transmitting surface (32) at the front of the lamp compartment and wherein the bulb (17) is partly surrounded by a ball reflector (34), which is located outside the light transmitting surface (32), the centre of which ball reflector (34) is at least approximately identical with the filament of the bulb (17) and which ball reflector (34) casts light from the bulb (17) onto the parabolic reflector (33), and wherein the front of the lamp compartment (10) is partly covered by a panel (30), which is there in addition to the ball reflector (34).

2. A rear lamp for motor vehicles according to claim 1, wherein the parabolic reflector (33) is located substantially only on one side of a plane running through the axis of the bulb (17).

3. A rear lamp for motor vehicles according to claim 1 or 2, wherein the ball reflector (34) is bigger than a portion of it, from which light from the bulb (17) is cast onto the parabolic reflector (33).

4. A rear lamp for motor vehicles according to claim 3, wherein in the space between the bulb (17) and the front of the lamp compartment (10) the ball reflector (34) extends beyond a portion from which light is cast onto the parabolic reflector (33).

5. A rear lamp for motor vehicles according to claim 4, wherein in the space between the bulb (17) and the front of the lamp compartment (10) the ball reflector (34) extends at least approximately up to a plane running through the axis of the bulb (17).

6. A rear lamp for motor vehicles according to claim 5, wherein the transparent cover glass (14) also spans across the panel (30).

7. A rear lamp for motor vehicles according to one of the preceding claims, wherein it comprises two adjacent lamp compartments (10, 11) and wherein the portion (31) of the front of the one lamp compartment (10) protected against the light from the bulb (17) by means of the ball reflector (34) and/or of the panel (30) in addition thereto follows the front of the other lamp compartment (11).

8. A rear lamp for motor vehicles according to claim 7, wherein the lamp compartment (10) assigned to the fog warning or backup lamp comprises the protected portion (31) at its front.

9. A rear lamp for motor vehicles, especially according to one of the preceding claims, wherein the cross-section of the lamp compartment (10) is bigger than the light transmitting surface (32) at the front of the lamp compartment (10), wherein the glass (18) of the bulb (17) is located at least partly in the portion of the lamp compartment (10) outside the light transmitting surface and wherein the back (12) of the lamp compartment (10) in the portion behind the light transmitting surface (32) is formed by a parabolic reflector (33).

## Revendications

1. Feu arrière pour véhicule, en particulier feu de brouillard ou feu de recul, comprenant une chambre (10) de feu qui est fermée vers le côté avant par un diffuseur transparent (14), comprenant une lampe à incandescence (17) qui est engagée dans la chambre (10) du feu en partant du côté arrière (12), et un réflecteur parabolique (33) qui renvoie sur le diffuseur (14) la lumière émise par la lampe à incandescence (17), caractérisé en ce que la chambre (10) du feu est, en section transversale, plus grande que la surface (32) de sortie de la lumière au droit de son côté avant, et en ce que la lampe à incandescence (17) est partiellement entourée d'un réflecteur sphérique (34) qui se trouve en dehors de la surface (32) de sortie de la lumière, dont le centre coïncide au moins approximativement avec le filament incandescent de la lampe à incandescence (17), et qui projette sur le réflecteur parabolique (33) la lumière émise par la lampe à incandescence (17), et en ce que le côté avant de la chambre (10) du feu est partiellement masqué par un diaphragme (30) prévu en supplément du réflecteur sphérique (34).

2. Feu arrière de véhicule selon la revendication 1, caractérisé en ce que le réflecteur parabolique (33) se trouve essentiellement sur un seul côté d'un plan qui passe par l'axe de la lampe à incandescence (17).

3. Feu arrière de véhicule selon la revendication 1 ou 2, caractérisé en ce que le réflecteur sphérique (34) est plus grand qu'un segment de ce réflecteur par lequel la lumière émise par la lampe à incandescence (17) est projetée sur le réflecteur parabolique (33).

4. Feu arrière de véhicule selon la revendication 3, caractérisé en ce que le réflecteur sphérique (34) s'étend dans la zone comprise entre la lampe à incandescence (17) et le côté avant de la chambre (10) du feu, sur un segment à partir duquel de la lumière est projetée sur le réflecteur parabolique (33).

5. Feu arrière de véhicule selon la revendication 4, caractérisé en ce que le réflecteur sphérique (34) s'étend, dans la région comprise entre la lampe à incandescence (17) et le côté avant de la chambre (10) du feu, au moins approximativement jusqu'à un plan qui passe par l'axe de la lampe à incandescence (17).

6. Feu arrière de véhicule selon la revendication 5, caractérisé en ce que le diffuseur transparent (14) se prolonge aussi sur le diaphragme (30).

7. Feu arrière de véhicule selon une des revendications précédentes, caractérisé en ce qu'il présente deux chambres (10, 11) de feu adjacentes et en ce que la région (31) du côté avant d'une (10) des chambres du feu qui est abritée de la lumière émise par la lampe à incandescence (17) par le réflecteur sphérique (34) et/ou par le diaphragme additionnel (30), est adjacente au côté avant de l'autre chambre (11) du feu.

8. Feu arrière de véhicule selon la revendication 7, caractérisé en ce que la chambre (10) du feu qui est affectée au feu de brouillard ou au feu de recul présente la région abritée (31) sur son côté avant.

9. Feu arrière de véhicule, notamment selon une des revendications précédentes, caractérisé en ce que la chambre (10) du feu est, en section transversale, plus grande que la surface (32) de sortie de la lumière par son côté avant, en ce que la lampe à incandescence (17) a son ampoule de verre (18) placée au moins partiellement dans la région de la chambre (10) du feu qui se trouve en dehors de la surface (32) de sortie de la lumière et en ce que le côté arrière (12) de la chambre (10) du feu est formée par un réflecteur parabolique (33) dans la région qui se trouve en arrière de la surface (32) de sortie de la lumière.